# EUROPEAN PATENT APPLICATION

(11) **EP 1 604 953 A1**
(43) Date of publication of application: **14.12.2005**
(21) Application number: 04719100.2
(22) Date of filing: 10.03.2004
(51) Int. Cl.: C01G 49/02

(54) **NOBLE METAL-MAGNETIC METAL OXIDE COMPOSITE PARTICLE AND METHOD FOR PRODUCING SAME**

(30) Priority: 17.03.2003 JP 2003072611
(71) Applicant: Kansai Technology Licensing Organization Co., Ltd., Kyoto-shi, Kyoto 600-8815 (JP)
(72) Inventor: YAMAMOTO, Takao,, Osaka-shi, Osaka 5460033 (JP); NAKAGAWA, Takashi, Mino-shi, Osaka 562-0003 (JP); OKITSU, Kenji, Osaka-shi, Osaka 558-0014 (JP); SEINO, Satoshi, Mino-shi, Osaka 562-0027 (JP)
(74) Representative: Smyth, Gyles Darren
(86) International application number: PCT/JP2004/003137
(87) International publication number: WO 2004/083124

(57) **Abstract**

The present invention provides a method for producing noble metal/magnetic metal oxide composite fine particles comprising the steps of dispersing magnetic metal oxide fine particles in a solution containing a noble metal ion or adding to the solution a metal ion that can form the magnetic metal oxide, and then irradiating the resulting dispersion or solution with ultrasonic waves, ionizing radiation or ultraviolet waves; and noble metal/magnetic metal oxide composite fine particles obtained according to the method. According to the method of the present invention, the desired composite particles can be stably mass-produced in a high yield. The composite particles thus obtained are for use in the field of medical care/diagnosis and like technical fields in particular.

## Description

### TECHNICAL FIELD

The present invention relates to composite fine particles of a noble metal and a magnetic metal oxide, and to a production method thereof.

### BACKGROUND ART

Fine particles, including nano-sized particles (nanoparticles) generally having a particle diameter of 1 µm or less, have been researched and developed in the hope of using them chiefly as adsorbents, materials for electronic devices, and catalysts. Known nanoparticles are made from, for example, metals (gold, silver, copper, platinum, etc.), semiconductors (CdSe, CdS, etc.), magnetic materials (γ-Fe₂O₃, Fe₃O₄, etc.), colloidal materials, etc. Recently, research and development of composite fine particles (composite nanoparticles) in which metal particles are supported on the surface of particulate metal oxides and the like has been extensively carried out.

Such nanoparticles are now expected to be applied to the fields of medical care/diagnosis, biotechnology, environment, and like technical fields due to their small size and large surface area. For example, they are considered promising as pharmaceutical agents and gene carriers in drug delivery systems. Specifically, although particles introduced into the living body are usually eliminated by the biophylaxis mechanism, fine particles, in particular nanoparticles, can avoid the biophylaxis mechanism and are likely to penetrate blood vessel walls and be taken up in tissues and cells. Once antibodies are affixed to the surface of fine particles, such fine particles are of use in the detection of antigens by antigen-antibody reactions and in the isolation/purification thereof. Marker-immobilized fine particles are considered effective as analytical reagents such as analytical markers, tracers, and the like. Furthermore, the applicability of magnetic fine particles to, for example, MRI as a contrast-enhancing agent and hyperthermia cancer therapy has been suggested.

As described above, nanoparticles, and composite nanoparticles in particular, are expected to be used in the field of medical care/diagnosis. However, the production of nanoparticles is considered to involve a still unelucidated complicated mechanism. It is difficult with the current state of the art to stably mass-produce substantially uniform composite nanoparticles in a high yield.

To date, the following methods have been reported as typical production methods of such composite nanoparticles and complexes.

### Method 1: Heating method

An aqueous solution of a gold compound is added dropwise to an aqueous solution containing at least one oxide of manganese, iron, cobalt, nickel, or copper under pH conditions of 7 to 11, and then heated to 100 to 800°C (see claims 2 and 4 of Japanese Examined Patent Publication No. 1993-34284).

### Method 2: Reduction method

A reducing agent such as hydrazine, formalin or the like is added dropwise to an aqueous solution with a pH of 7 to 11 in which a gold compound is dissolved and which contains at least one oxide of manganese, iron, cobalt, nickel, or copper to precipitate ultrafine particles of gold onto the oxide (see claim 3 of Japanese Examined Patent Publication No. 1993-34284).

### Method 3: Photocatalysis method

A nonconductive substance on which a semiconductive substance is supported is immersed in a metal-ion-containing solution and irradiated with visible light and/or ultraviolet light to reductively precipitate a layer of ultrafine metal particles (see Japanese Unexamined Patent Publication Nos. 1988-197638 and 1985-50172, and other publications).

### Method 4: Gamma-ray irradiation method 1

Although this is not exactly a method for producing composite nanoparticles, a complex is obtained by irradiating with γ-rays, for example, an aqueous metal ion solution (of Pt, Ag, etc.) containing zeolite, silica gel, colloidal silica or like substance to precipitate the metal in the pore or matrix of the substance (see *Solid State Science 4* (2002), 489-494; *J. Phys. Chem.* 1994, 98, 9619-9625; *Adv. Mater.* 2003, 15, No. 6, March 17, 511-513: *J. Mater.* Chem. 1996 6(5), 867-870; etc.).

### Method 5: Reversed micelle method

This method was developed by the present inventors. A W/O emulsion (reverse micelle) is created using a surfactant, which has an aqueous solution of an iron compound as the aqueous phase. A reducing agent is added to the emulsion to create a reversed micelle of iron nanoparticles. An aqueous solution of a gold compound is then added to this reverse micelle for reduction in a similar manner, thereby forming composite particles in which iron nanoparticles and gold nanoparticles are concomitantly present. (Proceeding of the 6^{th} International Conference of Nanostructured Materials, June 16-21, 2002, NM-749; *Journal of Alloys and Compounds* 359 (2003), 46-50; Abstract of Autumn Meeting of Japan Society of Powder and Powder Metallurgy 2002, 75-76)

### Method 6: Gamma-ray irradiation method 2

The present inventors previously reported this method. An aqueous Au solution containing TiO₂ nanoparticles is irradiated with ⁶⁰Co γ-rays to create Au/TiO₂ composite nanoparticles (21^{st} Century International Symposium Research Activity Report, March 11-12, 2003, 81-82).

### Method 7: Sonication method 1

The present inventors previously reported this method. A catalyst carrier such as alumina, titania, silica or the like is added to an aqueous tetrachloropalladate (Pd(II)) solution. The mixture is sonicated to precipitate Pd on the carrier *(Chemistry Letters* 1999, 271-272).

### Method 8: Sonication method 2

The present inventors previously reported this method. An aqueous Na[AuCl₄] solution is sonicated. An alumina particle carrier is added to this aqueous solution to precipitate Au on the carrier by reduction (*Bull. Chem. Soc. Jpn.* 75, No. 10 (2002), 2289-2296).

These already reported methods, however, are not for producing composite nanoparticles containing magnetic metals especially capable of being practically used in the field of medical care/diagnosis. In particular, Methods 1 to 4 above are not for producing composite particles, or even if they can be used to produce composite particles, the resulting composite particles have large variations in particle diameter. In other words, these methods cannot produce composite nanoparticles with uniform particle size.

With respect to Method 5, the surface of the resulting particles is covered with surfactant due to the use of an emulsion. Therefore, it is hopeless to use the particles in the field of medical care/diagnosis as a pharmaceutical agent or gene carrier by further furnishing the particle surface with a functional group or the like.

Method 6 is a modified version of Method 3. A feature of Method 6 is using γ-rays instead of the ultraviolet rays of Method 3. The only material for use in producing composite particles is photocatalyst titania particles. In other words, in this technique, gold particles are used in combination with titania particles to enhance the photocataltic activity. It is unlikely that this technique is applicable to the production of composite particles using magnetic particles, and in particular, composite particles suitable for use in the medical and like technical fields unrelated to the field of catalyst production, and specifically to the production of magnetic composite fine particles.

Method 7 is intended for catalyst production and relates solely to a technique to produce a Pd-supported alumina catalyst using sonication. It is unlikely that this technique is applicable to the production of magnetic composite particles suitable for application to the medical and like technical fields.

Method 8 relates to a technique using sonication for producing gold nanoparticles and composite particles in which gold nanoparticles are supported on an alumina carrier. The particle diameter and the particle size distribution of the resulting gold nanoparticles are large. Hence, they appear to be of limited practical use in many technical fields, and the use thereof in the medical field in particular appears to be particularly difficult.

As described above, known techniques for producing composite fine particles and complexes are not for producing magnetic composite fine particles, and it is unlikely that they are applicable to the production of such composite fine particles. With respect to the resulting composite fine particles, improvements are required in particle shape, uniformity, and other properties with a view to using them in the medical and like technical fields. Demand, therefore, exists for the development of a technique that allows magnetic composite fine particles with enhanced uniformity in particle shape to be stably mass-produced in high yield. In particular, composite particles advantageously applicable to the medical and like fields are required to have the following properties. In the current state of the art, no composite fine particles have been developed that have such properties.
(1) Small particle diameter
(2) The shape of each particle being as uniform as possible, with the particle size distribution being narrow
(3) The surface of particles being modified or able to be modified with functional groups
(4) Being magnetic
(5) Physically safe
(6) Readily mass-producible
(7) Exhibiting different colors depending on size
(8) Durable
(9) Highly stable and easy to handle

### DISCLOSURE OF THE INVENTION

An object of the present invention is to provide magnetic composite metal fine particles that have the aforementioned required properties and are suitable for use particularly in the medical care/diagnosis fields, biotechnology fields, environment-related fields, and like technical fields; and a method for producing such metal particles.

As described above, the inventors have been involved in the research and development of various metal nanoparticles such as titanium oxide powders on which gold nanoparticles are supported, magnetic metal oxide nanoparticles, and the like. In the course of their research and development, they have established a novel technique for producing magnetic composite metal fine particles in which noble metal atoms are affixed to the surface of magnetic metal oxide nanoparticles, and have succeeded in providing, due to this technique, novel composite fine particles that have the aforementioned required properties. The present invention has been accomplished as a result of further research carried out based on these findings.

The present invention includes the embodiments described in Items 1 to 17 below.
Item 1. A method for producing noble metal/magnetic metal oxide composite fine particles comprising the steps of dispersing magnetic metal oxide fine particles in a solution containing a noble metal ion or a noble metal complex, or adding to the solution a metal ion that can form the magnetic metal oxide; and irradiating the resulting dispersion or solution with ultrasonic waves or ionizing radiation. (Hereinafter such noble metal/magnetic metal oxide composite fine particles are sometimes simply referred to as "fine particles of the invention".)
Item 2. A method for producing noble metal/magnetic metal oxide composite fine particles comprising the steps of dispersing magnetic metal oxide fine particles in a solution containing a noble metal ion or a noble metal complex; and irradiating the resulting dispersion with ultrasonic waves or ionizing radiation.
Item 3. The method according to Item 1 or 2, wherein the noble ion or noble metal complex comprises at least one metal selected from the group consisting of gold, silver, platinum, palladium, ruthenium, rhodium, iridium, and rhenium.
Item 4. The method according to any one of Items 1 to 3, wherein the solution containing the noble metal ion or noble metal complex is an aqueous solution, hydroalcoholic solution, or alcoholic solution.
Item 5. The method according to any one of Items 1 to 4, wherein the solution containing the noble metal ion or noble metal complex further contains at least one additive selected from the group consisting of water-soluble high-molecular-weight compounds, surfactants, and organic solvents.
Item 6. The method according to any one of Items 1 to 5, wherein the magnetic metal oxide fine particles are fine particles comprising at least one member selected from the group consisting of γ-Fe₂O₃ and Fe₃O₄.
Item 7. The method according to any one of Items 1 to 6, wherein the concentration of the noble metal ion or noble metal complex in the solution containing the noble metal ion or the noble metal complex is 1 µM to 1 M; and the magnetic metal oxide fine particles are dispersed, or the metal ion that can form the magnetic metal oxide is added, in an amount of 0.001 to 50 wt.% relative to the solution.
Item 8. The method according to any one of Items 1 to 7, wherein the irradiation with ultrasonic waves is performed at a frequency of 10 kHz to 10 MHz and at an output of at least 1 W.
Item 9. The method according to any one of Items 1 to 7, wherein the irradiation with ionizing radiation is performed at an absorbed dose of at least 1 J/kg.
Item 10. A method for producing noble metal/magnetic metal oxide composite fine particles comprising the steps of irradiating a solution containing a noble metal ion or a noble metal complex with ultrasonic waves or ionizing radiation; and adding to and mixing in the irradiated solution magnetic metal oxide fine particles.
Item 11. The noble metal/magnetic metal oxide composite fine particles obtained according to any one of the methods set forth in Items 1 to 10.
Item 12. The noble metal/magnetic metal oxide composite fine particles of Item 11 that are magnetic and comprise magnetic metal oxide fine particles having a mean particle diameter of 1 nm to 1 µm and noble metal nanoparticles having a mean particle diameter of 1 to 500 nm affixed to the surface of the magnetic metal oxide fine particles.
Item 13. The noble metal/magnetic metal oxide composite fine particles of Item 12, wherein the magnetic metal oxide fine particles have a mean particle diameter of 1 to 100 nm.
Item 14. The noble metal/magnetic metal oxide composite fine particles of Item 13, wherein the ratio of the mean particle diameter of the noble metal nanoparticles to the mean particle diameter of the magnetic metal oxide particles is from 0.001 to 1 to 100 to 1.
Item 15. The noble metal/magnetic metal oxide composite fine particles of Item 13, wherein the magnetic metal oxide particles have a mean particle diameter of 1 to 100 nm and the noble metal nanoparticles have a mean particle diameter of 1 to 500 nm, and the ratio of the mean particle diameter of the noble metal nanoparticles to the mean particle diameter of the magnetic metal oxide particles is in the range of 0.1 to 1 to 10 to 1.
Item 16. The noble metal/magnetic metal oxide composite fine particles according to any one of Items 11 to 15 that are colored and dispersible in a liquid solvent.
Item 17. A substance in which noble metal/magnetic metal oxide composite fine particles and linker molecules are bonded, which is a substance in which the noble metal/magnetic metal oxide composite fine particles of any one of Items 11 to 16 and linker molecules are bonded, and each linker molecule is bonded to a noble metal contained in one of the fine particles and has a functional group that can chemically bond with a test substance.
Item 18. The noble metal/magnetic metal oxide composite fine particles according to Item 17, wherein the linker molecule is at least one member selected from the group consisting of alkane dithiols, glutathione, and phosphorothioates, and the functional group is at least one member selected from the group consisting of an amino group, hydroxyl group, carboxyl group, thiol group, imino group, ether linkage, carboxylate, phosphoric acid residue and sulfide residue.
Item 19. The substance according to Item 17 or 18 which is an analytical reagent for a substance selected from the group consisting of pharmaceuticals, antigens, antibodies, receptors, haptens, enzymes, proteins, peptides, nucleic acids, hormones, pathogens, and toxins.
Item 20. The substance according to Item 17 or 18 which is a pharmaceutical, diagnostic agent, cell marker, enzyme fixative, or protein refining agent.
Item 21. The substance according to Item 17 or 18 for use in chromatography.
Item 22. The substance according to Item 17 or 18 for use in soil modification, or water and air quality improvement.
Item 23. The substance according to Item 17 or 18 for use as a catalyst, adsorbent, or sensor.

According to the method of the present invention, the desired noble metal/magnetic metal oxide composite fine particles (the fine particles of the invention) can be stably and readily mass-produced in a high yield. In particular, according to the present invention, the mean particle diameter of the noble metal particles present in the fine particles of the invention can be controlled as desired within the range of about 1 to about 500 nm, and preferably about 1 to about 100 nm, by suitably changing the conditions for the irradiation with ultrasonic waves or ionizing radiation. Furthermore, the particle diameter distribution of each group of fine particles can be suitably controlled, and therefore fine particles that contain noble metal particles with a narrow particle diameter distribution can be obtained if desired.

The fine particles of the invention thus obtained are composite particles containing magnetic metal oxide fine particles and noble metal nanoparticles affixed to or supported on the surface of the magnetic metal oxide fine particles, and it is a feature of the fine particles of the invention that they are magnetic. The mean particle diameter of the magnetic metal oxide fine particles is usually about 1 nm to about 1 µm, and preferably about 1 to about 100 nm. The mean particle diameter of the noble metal nanoparticles is about 1 to about 500 nm, and preferably about 1 to about 100 nm. The ratio of the mean particle diameter of the magnetic metal oxide fine particles to the mean particle diameter of the noble metal nanoparticles is preferably such that, when the mean particle diameter of the magnetic metal oxide fine particles is A and the mean particle diameter of the noble metal nanoparticles is B, it satisfies 0.001<B/A<100, and preferably 0.1<B/A<10.

It is another feature of the fine particles of the invention that the fine particles are dispersible in a liquid solvent, the state of dispersion can be maintained consistently, and the fine particles are colored due to surface plasmon absorption.

Since the fine particles of the invention have the desired magnetism due to the use of a magnetic metal oxide, it is easy to, for example, magnetically guide, capture, and isolate the fine particles. Therefore, reagents prepared using the fine particles can be readily isolated magnetically.

With respect to the fine particles of the invention, the noble metal nanoparticles (noble metal atoms) affixed to the surface of the magnetic metal oxide can be modified with functional groups. The fine particles of the invention can chemically bind to nucleotides, proteins, antibodies, enzymes, cells, markers, pharmaceutically active compounds, or the like via such functional groups. The fine particles thus obtained are effective as a separating/purifying agent for analytical reagents for pharmaceuticals, diagnostic agents, drugs, and the like, especially in the field of medical care/diagnosis.

The aforementioned noble metals and magnetic metal oxides are biologically safe, and with respect to the method of the invention, it is not necessary to use harmful reagents in the production processes thereof. The fine particles are therefore in themselves highly safe for application to the medical field.

Moreover, the fine particles of the invention are advantageous in terms of long-term stability since the fine particles constantly exhibit the aforementioned various properties over a long period of time, and are easy to handle.

The fine particles of the invention exhibit different features depending on the size of each group of particles. For example, the composite fine particles whose overall size is in the range of 4 to 400 nm are suitable for application to DDS since they can usually circulate stably in blood vessels. In particular, fine particles of the invention having a mean particle diameter of 100 nm or less can have an effect of selectively accumulating in a solid cancer tissue, i.e., an EPR effect (enhanced permeability and retention effect). Therefore, once an anticancer agent, for example, is bonded to or supported on the fine particles, the anticancer agent can be selectively delivered to a cancerous tissue. It is thus presumed that the effects of cancer treatment can be significantly enhanced without accompanying harmful side effects.

The noble metal particles present in the fine particles of the invention that have relatively a small mean particle diameter within the aforementioned range have a great surface area. Therefore, relatively large amounts of proteins and other substances can be bonded to the surface of the noble metal particles. The fine particles of the invention are thus suitable for application to pharmaceuticals, diagnostic agents, drug analysis reagents, etc. In particular, the fine particles of the invention in which the noble metal particles are supported such that the surface of the magnetic metal oxide particles is coated with a large amount of the noble metal particles are advantageous in avoiding the risk of bonding with unwanted materials since the magnetic metal oxide is not revealed at the surface of the fine particles of the invention.

The fine particles of the invention express a color due to surface plasmon absorption most significantly when the noble metal particles present therein have a mean particle diameter of about 20 nm. Therefore, such fine particles encompassed by the invention are suitable for applications in which their color variation is advantageous. Fine particles encompassed by the present invention in which a plurality of noble metal particle types are scatteredly supported on the surface of the magnetic metal oxide, when applied to pharmaceuticals and the like, undergo color changes due to the binding of the noble metal particles themselves via biomolecules and like materials, thereby being advantageous in accurately identifying such biomolecules and the like. Relatively large such fine particles in which the magnetic metal oxide particles have a size on the order of about 10² nm are advantageous in being very easy to capture using magnetic force. Such fine particles in which the magnetic metal oxide particles have a relatively small size on the order of about 10⁰⁻¹ nm can also be captured using magnetic force. Moreover, such fine particles are likely to exhibit good dispersibility in water due to the size of the magnetic metal oxide particles.

### BRIEF DESCRIPTION OF THE DRAWINGS

Figure 1 (1-a and 1-b) presents graphs showing the results of absorbance analyses for the dispersions of the fine particles of the invention prepared in Example 1 (Figure 1-a: before magnetic separation, Figure 1-b: after magnetic separation).
Figure 2 is a graph showing the result of an X-ray diffraction measurement of the fine particles of the invention prepared in Example 1.
Figures 3 and 4 are transmission electron microscope images of the fine particles of the invention prepared in Example 1.
Figure 5 is a transmission electron microscope image of the fine particles of the invention prepared in Example 2.
Figure 6 is a transmission electron microscope image of the fine particles of the invention prepared in Example 3.
Figure 7 is a graph showing the result of absorbance analysis of the dispersion of the fine particles of the invention prepared in Example 4.
Figure 8 is a bar chart showing the particle size distribution of the gold nanoparticles present in the fine particles of the invention prepared in Example 5.
Figure 9 is a transmission electron microscope image of the fine particles of the invention prepared in Example 6.
Figure 10 is a graph showing the result of absorbance analysis of the dispersion of the fine particles of the invention prepared in Example 7.
Figure 11 is a transmission electron microscope image of the fine particles of the invention prepared in Example 8.
Figure 12 is a bar chart showing the particle size distribution of the gold nanoparticles present in the fine particles of the invention prepared in Example 8.
Figure 13 is a graph showing the result of an X-ray diffraction measurement of the fine particles of the invention prepared in Example 8.
Figures 14 and 15 are transmission electron microscope images of the fine particles of the invention prepared in Example 9.
Figures 16 and 17 are bar charts showing the particle size distribution of the gold nanoparticles present in the fine particles of the invention prepared in Example 9.
Figure 18 is a graph showing the result of an X-ray diffraction measurement of the fine particles of the invention prepared in Example 9.
Figure 19 is a transmission electron microscope image of the fine particles of the invention prepared in Example 10.
Figure 20 is a graph showing the result of absorbance analysis for the dispersion of the fine particles of the invention prepared in Example 12.
Figure 21 is a graph showing the relationship between the duration of ultrasonic irradiation and the concentration of gold ions remaining in the reaction solution of Example 12.
Figure 22 is a transmission electron microscope image of the fine particles of the invention prepared in Example 14.
Figures 23 and 24 are transmission electron microscope images of the comparative fine particles prepared in Comparative Example 1.

### BEST MODE FOR CARRYING OUT THE INVENTION

The method for producing the fine particles of the invention is described below in detail.

The fine particles of the invention can be produced by dispersing magnetic metal oxide fine particles in a solution containing a noble metal ion or a noble metal complex, or adding to the solution a metal ion that can form the magnetic metal oxide; and irradiating the resulting dispersion or solution with ultrasonic waves or ionizing radiation. Due to this irradiation, reduced noble metal nanoparticles (noble metal atoms) precipitate on the surface of the starting magnetic metal oxide fine particles (when a metal ion is used, magnetic metal oxide fine particles are first formed and then precipitation occurs on the surface of the magnetic metal oxide fine particles).

### (1) Solution containing noble metal ion or noble metal complex

Examples of noble metals usable for the noble metal ion or the noble metal complex include gold, silver, platinum, palladium, ruthenium, rhodium, iridium, rhenium, and like metals. Among such metals, the use of gold, silver and the like is advantageous. In particular, since the surface plasmon absorption of such metals is within the visible region, the presence of fine particles of the invention which are obtained by the bonding (supporting) of such a metal can be readily confirmed by plasmon measurement. Therefore, the fine particles of the invention obtained using such a metal are advantageous because if they are used in an antigen-antibody reaction, the progress of the reaction can be readily monitored visually or by measuring changes in the surface plasmon absorption spectrum.

The solution containing a noble metal ion is an aqueous or alcoholic solution containing ions of an aforementioned noble metal. It can be prepared according to a standard method by dissolving a suitable compound that can give noble metal ions in water, water-containing alcohol, alcohol (methanol, ethanol, *n*-propanol, isopropanol, *n*-butanol, *sec*-butanol, *t*-butanol, etc.), or in an acid (that may contain an organic substance such as an alcohol) such as hydrochloric acid, sulfuric acid and nitric acid. Examples of suitable compounds include nitrates, chlorides, acetates, citrates, sulfates, carbonates, oxides, and hydroxides of noble metals. Specific examples are silver nitrate, chloroauric acid, palladium chloride, etc. Among such examples, aqueous solutions of chlorides, nitrates and the like, and hydrochloric acid solutions and nitric acid solutions of oxides, and the like, that are easily miscible in water and relatively inexpensive are preferable. The concentration of noble metal ions in the resulting solution is not limited. It is usually suitable to select from a range such that the concentration of noble metal ions in the noble metal ion-containing solution is about 1 µM to about 1 M, and preferably about 0.1 to about 10 mM. When the noble metal ion concentration is too high by exceeding the aforementioned range, the size of the resulting noble metal particles is likely to be too great, or noble metal particles that are not bonded to magnetic metal oxide particles are likely to be formed in large amounts. In contrast, when the noble metal ion concentration is far below the aforementioned range, the desired composite particles can hardly be obtained.

A solution containing a noble metal complex refers to an aqueous solution, a hydroalcoholic solution or an alcoholic solution of a compound in which a suitable ligand is coordinated to an aforementioned noble metal ion. Ligands are not limited insofar as they have an unshared electron pair or are negatively charged, and wide variety of ligands can be used. Specific examples are halide ions (F⁻, Cl⁻, Br⁻, I⁻, etc.), cyanide ion (CN⁻), ammonia (NH₃), pyridine, and like ,monodentate ligands; ethylenediamine (H₂NCH₂CH₂NH₂), acetylacetate ion, and like bidentate ligands; ethylenediamine tetraacetate ion and like hexadentate ligands; etc.

Suitable additives can be added as necessary to the aforementioned solution containing a noble metal ion or noble metal complex. Examples of such additives include polyvinyl alcohol and like water-soluble high-molecular-weight compounds; surfactants; alcohols, ethers (tetrahydrofuran, diethyl ether, diisopropyl ether, and the like), polyols (alkylene glycols, polyalkylene glycols, monoalkyl and dialkyl ethers thereof, glycerol, etc.), carboxylic acids (formic acid, acetic acid, propionic acid, lactic acid, glycolic acid, etc.), ketones (acetone, methyl ethyl ketone, etc.), and like various water-miscible organic solvents; etc. In some cases, such additives are effective in enhancing the rate of the reduction reaction of the metal ions and controlling the size of the resulting metal particles.

### (2) Magnetic metal oxide fine particles and metal ions that can form magnetic metal oxide

Magnetic metal oxide fine particles usable in the method of the present invention are not limited insofar as they are magnetic. Specific examples thereof are fine particles of iron oxides (in particular, magnetite, maghemite, ferrite, and like magnetic oxides containing Fe₂O₃ as a main component). Particularly preferable examples are magnetic particles of γ-Fe₂O₃, Fe₃O₄, and the like.

Oxides of other metals can be used as the magnetic metal oxide particles of the present invention, such as oxides of cobalt, nickel, and the like; oxides of intermetallic compounds of such metals themselves and oxides of intermetallic compounds of such metals with iron (e.g., CoPt, FePt, etc.); and oxides of alloys of such metals (e.g., Co/Ni, Co/Fe, Ni/Fe and like binary alloys, Co/Fe/Ni and like ternary alloys, etc.).

Magnetic metal oxide fine particles for use in the present invention preferably have a mean particle diameter of 1 nm to 1 µm. A particularly preferable size is such that the magnetic metal oxide fine particles can be called nanoparticles. Usually, the mean particle diameter thereof is 1 µm or less, preferably about 1 to about 500 nm, and more preferably about 5 to about 200 nm.

Such magnetic metal oxide fine particles and production methods therefor are known. For example, such fine particles can be produced according to a PVS (physical vapor synthesis) method (see U.S. Patent 5,514,349 to J.C. Parker, M.N. Ali, and B.B. Lympany). Magnetic metal oxide fine particles are commercially available. Commercially available products, for example, those manufactured by Nanoteck, are usable in the present invention.

The amount of magnetic metal oxide fine particles dispersed in the solution containing a noble metal ion or a noble metal complex is usually selected from the range of about 0.001 to about 50 wt.%, and preferably about 0.1 to about 10 wt.%. Fine particles of the invention with the desired properties can be obtained when the magnetic metal oxide fine particles are used within such a range.

The inventors have confirmed that, in connection with the method of the present invention described above (the first method), when a solution containing a noble metal ion or a noble metal complex is irradiated with ultrasonic waves or ionizing radiation without magnetic metal oxide fine particles being dispersed therein, noble metal fine particles are produced, and when magnetic metal oxide fine particles are then added to and mixed in the system containing the noble metal fine particles, the fine particles of the invention can be obtained as with the method of the invention described above.

Hence, the present invention encompasses a method for producing noble metal/magnetic metal oxide composite fine particles comprising the steps of irradiating with ultrasonic waves or ionizing radiation a solution containing a noble metal ion or a noble metal complex, and then adding and mixing magnetic metal oxide fine particles (the second method).

The second method of the present invention can be carried out in the same manner as the method described above except that the time of adding magnetic metal oxide fine particles is different. Although it is not clear why the desired fine particles of the invention can be obtained according to this method, it is presumed that, as described below, the surface of the noble metal particles obtained according to this method is naked and highly reactive immediately after the production so that once magnetic metal oxide fine particles are present in the system, the noble metal particles bind to the surface of the magnetic metal oxide fine particles, thereby becoming supported thereon.

Moreover, the inventors have confirmed that, in connection with the first method of the present invention in which magnetic metal oxide fine particles are dispersed in the aforementioned solution containing a noble metal ion or a noble metal complex, and the solution is then irradiated with ultrasonic waves or ionizing radiation, when a metal ion that can form a magnetic metal oxide, i.e. an ion of the metal constituting the fine particles, is used in place of the magnetic metal oxide fine particles, the desired noble metal/magnetic metal oxide composite fine particles of the invention can likewise be produced. In this case, the metal ion may be in the form of, for example, a solution in which an aforementioned metal such as Fe, Co, Ni, etc., is dissolved in hydrochloric acid, sulfuric acid, nitric acid or like acid (that may contain an organic substance such as an alcohol); in the form of an aforementioned metal salt or a metal complex; or in a form such that such a metal salt or metal complex is dissolved in a suitable solvent, and is introduced into the aforementioned solution containing a noble metal ion or a noble metal complex. The amount of metal ion is such that the amount of magnetic metal oxide fine particles formed from the metal ion satisfies the aforementioned concentration, and it is suitably selected usually from the range of 0.01 mM to 1 M, calculated as metal ions.

### (3) Irradiation with ultrasonic waves or ionizing radiation

In a method of the present invention (the first method), a liquid medium containing a noble metal ion or noble metal complex in which magnetic metal oxide fine particles (or a metal ion that can form a magnetic metal oxide) are dispersed or present is irradiated with ultrasonic waves or ionizing radiation.

Due to this irradiation, the desired fine particles of the invention can be obtained in which noble metal atoms or nanoparticles thereof are bonded to the surface of magnetic metal oxide fine particles. The mechanism of this bonding is currently not entirely clear. Although not wishing to be bound by theory, the inventors presume that noble metal ions (or noble metal complexes) in the solution are reduced due to the energy given by the irradiation with ultrasonic waves or ionizing radiation, and elemental noble metal is thereby precipitated on the surface of the magnetic metal oxide fine particles. Whether an elemental noble metal has precipitated on the surface of magnetic metal oxide particles or not can be confirmed by reference to, for example, TEM images of the fine particles of the invention as obtained in the Examples described below.

Specifically, the inventors presume that, once the aqueous medium in which the magnetic metal oxide fine particles are suspended is excited by the irradiation of ultrasonic waves or ionizing radiation with an energy far greater than chemical energies, the fine particles of the invention (composite fine particles) are formed as follows. Ultrasonic irradiation and ionizing radiation irradiation generate, as is generally known, highly reductive or oxidative chemical species in a time- and space-confined area due to the generation of bubbles (cavities) and ionization respectively in the aqueous medium. Noble metal nanoparticles generated due to the action of these chemical species have a highly reactive surface immediately after their generation. Therefore, they firmly bond with concomitant magnetic metal oxide fine particles.

It is presumable that when ultrasonic waves and ionizing radiation act on a heterogeneous system composed of magnetic metal oxide fine particles and water functioning as a dispersion medium, the intensity of the action of ultrasonic waves and ionizing radiation is not uniform at the interface between the aqueous phase and the magnetic metal oxide fine particle phase, at which the difference in properties is significant, and the chance of redox reaction at and around the interface is increased. It is known that ionizing radiation is absorbed particularly strongly by solid materials with a relatively high density.

Moreover, ultrasonic irradiation of an aqueous phase containing a surfactant and the like generates a variety of organic radicals that function as reducing agents. With respect to irradiation with ionizing radiation, similar radicals are also generated due to collisions with, for example, photons with very high energies. The inventors believe that the generation of such radicals contributes to controlling the production rate of the fine particles of the invention and the particles size thereof.

With respect to a system in which metal ions that can form magnetic metal oxide fine particles are present, in addition to a redox reaction in the solution, an oxidation reaction by oxygen or the like contained in solvent water, or a gas dissolved therein sequentially progresses by the irradiation with ultrasonic waves and ionizing radiation. A magnetic metal oxide is generated from the metal ions through these chemical reactions. The inventors presume that noble metal nanoparticles in contrast are not oxidized due to their chemical stability, and therefore noble metal/magnetic metal oxide composite fine particles are eventually formed.

Ultrasonic irradiation and ionizing radiation irradiation can be carried out under conditions such that noble metal atoms are precipitated by the reduction of noble metal ions (conditions such that, when metal ions that can form magnetic oxide fine particles are used, magnetic oxide fine particles can be generated and elemental noble metal can be precipitated on the surface of the magnetic oxide fine particles as described above).

Ultrasonic irradiation is usually performed at a frequency of 10 kHz to 10 MHz and an output of 1 W or greater. Ultrasonic irradiation is more preferably performed in an inert gas-purged, such as argon (Ar)-purged, atmosphere. An example of preferable irradiation conditions includes a frequency of 200 kHz, output of 200 W, and irradiation time of 1 to 300 minutes.

Ionizing radiation includes direct (primary) ionizing radiation and indirect (secondary) ionizing radiation. Direct ionizing radiation refers to beams of charged particles such as electrons, protons, and α-particles; and indirect ionizing radiation refers to beams of uncharged particles, such as γ-rays (electromagnetic waves), x-rays, and neutron beams. It is advantageous that the wavelength of the ionizing radiation be shorter than 1 nm, preferably 0.1 nm or shorter, and more preferably 0.01 or shorter. Generally, the shorter the wavelength, the shorter the time to produce noble metal fine particles with a uniform size.

Irradiation with ionizing radiation is usually performed at an absorbed dose of 1 J/kg or greater, and preferably 1 to 1000000 J/kg. In particular, when used as the ionizing radiation, γ-rays are preferably irradiated at a dose of 1 Gy or greater. A specific and preferable example of performing γ-ray irradiation includes the use of a ⁶⁰Co γ-ray source (energy of γ-ray photons: 1.25 MeV) as a radiation source, a dose rate of about 3 kGy/h, and an irradiation time of 1 to 18 hours.

Irradiation with ionizing radiation is preferably performed while stirring the dispersion to keep the magnetic particles uniformly dispersed. Stirring is not particularly necessary when ultrasonic irradiation is performed because ultrasonic irradiation itself affords the effect of stirring. In the present invention, ionizing radiation irradiation and ultrasonic irradiation can be performed in combination. Such combined irradiation often helps to produce the desired fine particles of the invention in which magnetic particles are well dispersed due to the stirring effect of the ultrasonic irradiation.

Temperature conditions for the irradiation with ionizing radiation and/or ultrasonic waves are not limited. The irradiation with ionizing radiation and/or ultrasonic waves is usually performed at room temperature (ordinary temperatures), but it can be performed under cooled or heated conditions at about 0 to about 100°C. The size of a container to accommodate the dispersion to be irradiated with ionizing radiation and/or ultrasonic waves is not limited insofar as the dispersion in the container can be maintained in a homogeneous condition by, for example, stirring. Usually, it can be suitably selected from the order of about 1 ml to the order of about 100 1.

### (4) Fine particles of the invention

A dispersion of the fine particles of the invention can be obtained in the manner described above. This dispersion can be used as is in a variety of applications. The fine particles of the invention present in the dispersion may be magnetically isolated using a suitable magnet taking advantage of their magnetism and then dried to recover them in the form of a powder product. Such a powder product can be used as is or redispersed in a suitable dispersion medium such as water, for use in a variety of applications.

The method of the invention allows, as described above, the production of fine particles that have the properties required to be suitable for application to the field of medical care/diagnosis. In addition to the field of medical care/diagnosis, fine particles obtained according to the invention are of use as a novel material in a wide variety of technical fields such as biotechnology fields, environment-related fields, etc.

### (5) Applications of the fine particles of the invention

A typical application of the fine particles of the invention is in the field of medical care/diagnosis. Such kinds of application include uses as pharmaceuticals (such as drugs for DDS); diagnostic agents; analytical reagents for a variety of substances (pharmaceutically active compounds, antigens, antibodies, receptors, haptens, enzymes, proteins, peptides, nucleic acids, hormones, pathogens, toxins, etc.); separation/purification agents for cells and the like (cell markers, enzyme fixatives, protein refining agents, etc.); etc. In particular, the fine particles of the invention are dispersible in a liquid solvent and can be produced as a dispersion that can be considered as being composed of a homogenous phase. The fine particles of the invention have a large surface area due to the fine particle form, thereby being able to promptly and highly accurately give the desired results as diagnostic agents, analytical reagents, separation/purification agents, etc. Moreover, the fine particles of the invention are advantageous in being able to be readily separated and recovered using magnetism.

With respect to use as an analytical reagent, separation/purification agent, or the like as described above, the fine particles of the invention can be used as is or in a supported form using a suitable carrier in various types of chromatography such as high-performance liquid chromatography (HPLC), column chromatography, thin-layer chromatography, adsorption chromatography, and affinity chromatography. In particular, the fine particles of the invention are advantageous in being easily recovered and washed due to their magnetism and in being able to be regularly and precisely packed by taking advantage of magnetic field orientation.

Moreover, the fine particles of the invention can be used in soil modification and water and air quality improvement. An example of using the fine particles of the invention in soil modification is to use them by bonding with a linker molecule that can bind with an environmental hormone. This application allows selective and efficient binding to an environmental hormone without capturing other compounds (humic substances, fulvic acid, etc.) contained in large amounts in the soil. As described above, the use of the fine particles of the invention allows efficient soil purification by taking advantage of their highly selective binding ability in combination with a magnetic separation technique. Similarly, the fine particles of the invention are applicable to water and air quality improvement as in the soil improvement described above.

Furthermore, the fine particles of the invention can be used as catalysts, adsorbents, sensors, etc. In such applications, the fine particles of the invention can be regularly and precisely arranged due to their magnetism, thereby allowing high accumulation. Moreover, the fine particles of the invention are useful as reusable materials due to their ease of recovery.

For use in such various applications, the noble metal atom supported at the surface of the fine particles of the invention can be modified by suitable functional groups to give the fine particles of the invention an ability to chemically bond (covalently bond) test substances such as nucleotides, proteins, antibodies, enzymes, cells, markers, pharmaceutically active compounds, etc. The types of such functional groups and modes of modification with such functional groups are known in this technical field. Examples of functional groups include those bondable to metals, specifically, amino, hydroxyl, carboxyl, thiol (-SH) and imino groups; ether linkages (ether groups); carboxylic acid (carboxylate), phosphoric acid and sulfide residues; etc. Modification by functional groups can be carried out according to known methods in consideration of the type of functional groups. For example, modification by an -SH group can be accomplished according to a standard method using a linear alkanedithiol, glutathione, phosphorothioate or the like as a linker molecule. The present invention also provides fine particles prepared as above to which linker molecules have been bonded.

The bonding of the fine particles of the invention to test substances is via linker molecules as described above. Therefore, where appropriate, linker molecules may be bonded to test substances that are to be bonded to the fine particles of the invention instead of bonding linker molecules to the surface of the fine particles of the invention.

The fine particles of the invention are advantageously used in the field of medical care/diagnosis because a substance formed by the bonding of the fine particles to a test substance can easily be magnetically isolated due to the magnetism of the fine particles.

### Examples

Examples are given below to describe the present invention in more detail.

### Example 1

### (1) Preparation of magnetic metal oxide fine particles to produce fine particles of the invention

A commercial product prepared according to a PVS (physical vapor synthesis) method was used as magnetic metal oxide nanoparticles (Fe₂O₃ nanoparticles, trade name: NanoTek™ Iron Oxide, manufactured by Nanophase Technologies Corporation, acquired from Adachi New Industrial Co., Ltd., mean particle diameter: 23 nm).

### (2) Preparation of fine particles of the invention

To 50 ml of a 1 wt.% aqueous PVA solution were added 49.2 mg of the magnetic metal oxide nanoparticles (mean particle diameter: 23 nm) of (1) above, 8.5 mg of HAuCl₄ (the amount equivalent to 4.9 mg Au, creating a concentration of 0.5 mM) and 0.472 ml of 2-propanol, to prepare a starting nanoparticle dispersion. The dispersion was charged into a glass vial (volume: 70 ml) and sealed, and then irradiated at room temperature with γ-rays at a dose rate of approximately 3 kGy/h for 3 hours while stirring. Conditions of γ-ray irradiation were as follows. Radiation source: cobalt 60 γ-ray source (energy of γ-ray photons: 1.25 MeV)
Intensity at radiation source: about 7000 curies

In this manner, a solution in which fine particles of the invention (noble metal/metal oxide composite fine particles) were dispersed was obtained.

### (3) Isolation of fine particles (powder) of the invention

A magnetic field created by a cylindrical magnet with a diameter of 30 mm and a height of 10 mm (surface magnetic flux density: 445 mT) was applied to the dispersion obtained in (2) from outside the glass vial accommodating the dispersion, and the glass vial was left to stand for 1 to 24 hours in the field. The glass vial was then opened and the supernatant was removed. 50 ml of water was added to the remaining portion to prepare a dispersion. This redispersion was dried, thereby giving the fine particles of the invention in the form of a powder.

### (4) Tests for examining the properties of the fine particles of the invention

### (4-1) Absorbance analysis

The dispersion obtained in (2) above (containing the fine particles of the invention before magnetic separation), the redispersion of the fine particles of the invention prepared in (3) above (after magnetic separation, referred to as the magnetic component) and, for comparison, the supernatant removed after magnetic separation (referred to as the non-magnetic component) were each diluted 10-fold with water (except for the non-magnetic component), and then subjected to absorbance analysis under the following conditions.

### (Conditions of absorbance analysis)

- Measuring instrument:: Varian Cary 50 (Varian Inc.)
- Measuring conditions:: Using a disposable cell having an optical path length of 1 cm

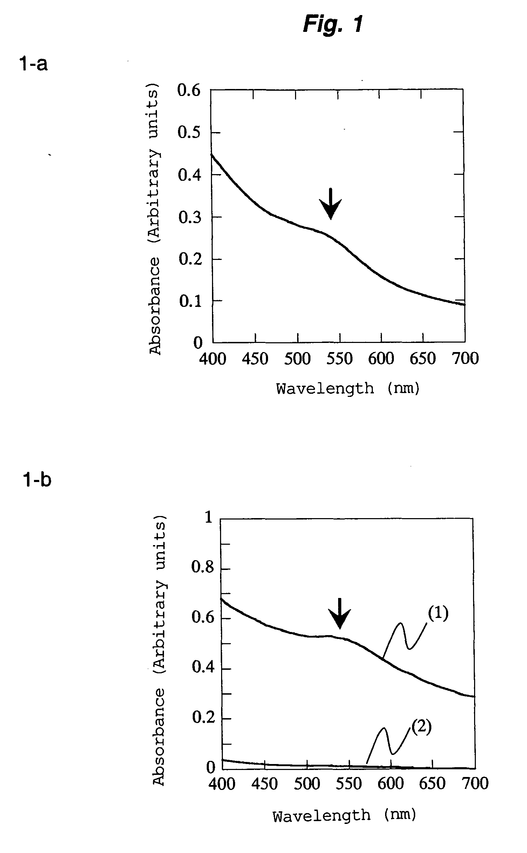

The results are presented in Figures 1-a and 1-b. In both figures, the horizontal axis represents wavelength (nm) and the vertical axis represents absorbance. In Figure 1-b, "(1)" is of the magnetic component, and "(2)" is of the non-magnetic component. The arrows in Figures 1-a and 1-b indicate surface plasmon absorptions due to Au nanoparticles.

As can be understood from the results presented in Figure 1-a, the dispersion of the fine particles of the invention before magnetic separation showed a surface plasmon absorption due to the gold supported on the fine particles at about 550 nm.

Likewise, a similar plasmon absorption was observed with respect to the magnetic component as can be understood from the results presented in Figure 1-b. In contrast, the non-magnetic component did not exhibit such a plasmon absorption. It is hence clear that the magnetic separation can isolate the gold-supported nanoparticles.

### (4-2) X-ray diffraction measurement (XRD)

A fine particle specimen of the invention (powder) that had been magnetically separated as in (3) above was subjected to an XRD measurement (measuring instrument: Rigaku RINT 2100 Ultima (manufactured by Rigaku Corporation), with Cu-Kα1 radiation).

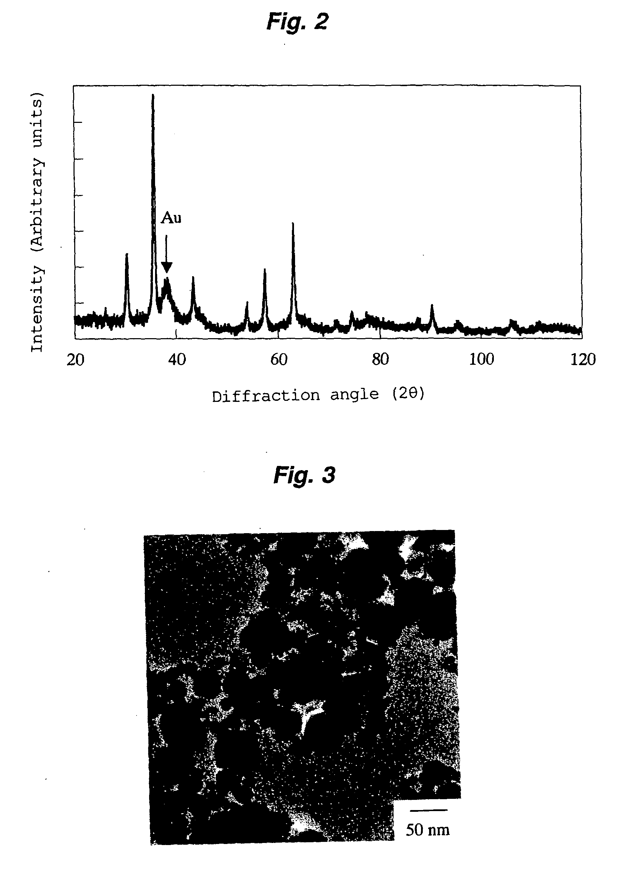

The result is shown in Figure 2 (horizontal axis: 2θ, vertical axis: intensity ratio (absolute units)).

As can be understood from the results presented in Figure 2, the fine particles of the invention after magnetic separation showed a peak derived from gold at approximately 2θ = 37 to 38, thereby demonstrating that gold is supported on the fine particles of the invention.

### (4-3) Transmission electron microscope (TEM) observation

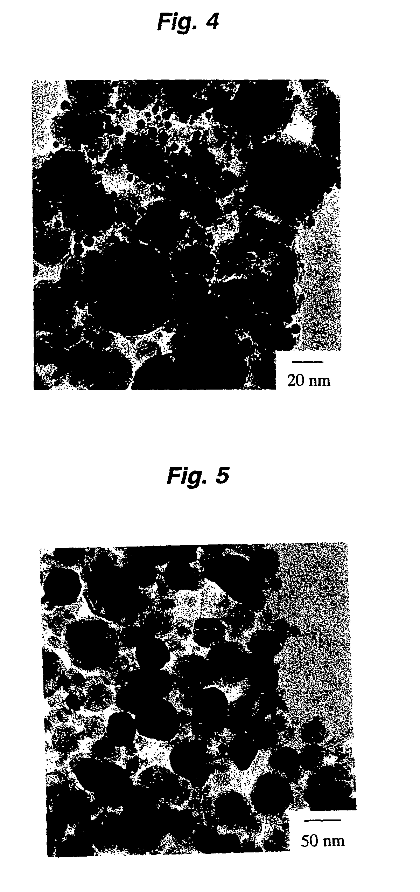

Transmission electron microscope images of a powder specimen of the fine particles of the invention (as prepared in (3) above) are presented in Figure 3 (taken with 50000x magnification) and Figure 4 (taken with 100000x magnification).

It is clear from the figures that with respect to the fine particles of the invention a large number of fine Au particles (mean particle diameter of about 5 nm) are supported on the surface of Fe₂O₃ nanoparticles. Specifically, it is clear that the size of the Fe₂O₃ nanoparticles is within the range of about 5 to about 100 nm, the mean particle diameter thereof is about 23 nm, and the Au particles present on the surface of the Fe₂O₃ nanoparticles are substantially uniformly sized. These images are of the specimen after drying, and therefore the Fe₂O₃ nanoparticles appear to be in the form of an agglomerate. Magnetic metal oxide particles also appear to be in the form of agglomerates in the other TEM images because they were dried during the preparation of the powder specimens.

### (4-4) Glutathione (GSH) adsorption test

To the redispersion of the fine particles of the invention prepared in (3) above (the magnetic component after magnetic separation, referred to as the redispersion of the invention) was added glutathione (GSH) in an amount such that the initial concentration thereof was 100 µM, and the mixture was stirred for 2 hours. Fine particles were captured by magnetism as in (3) above and separated using a filter. The GSH concentration of the supernatant remaining after separating the fine particles was obtained by absorbance analysis as described below. The difference obtained when subtracting the GSH concentration of the supernatant from the initial GSH concentration was considered to be the amount of GSH bonded to the fine particles as a measure of the affinity of the fine particles to GSH.

Quantification of the GSH remaining in the supernatant was carried out according to a known method (G.L. Ellman, *Arch. Biochem. Boiphys.* 82, 70-77 (1959); O.W. Griffith, *Anal. Biochem.* 106, 207-212 (1980)).

Specifically, to 0.9 ml of the supernatant after the removal of the fine particles were added 0.1 ml of an aqueous sulfosalicylic acid solution (concentration: 5 wt.%) as a coloring reagent, 1 ml of an aqueous 2-nitrobenzoic acid solution (concentration: 1 mM), and 9 ml of a phosphate pH standard solution (pH 7.41). The GSH concentration was quantified according to the absorbance at the wavelength of 412 nm using a UV-VIS spectrophotometer.

The gold nanoparticle dispersion used herein was prepared as below according to a method described in prior art publications (see, for example, *New J. Chem*. 1998, 1239-1255). Specifically, an aqueous solution was prepared by adding 8.5 mg of HAuCl₄ and 0.472 ml of 2-propanol to 50 ml of an aqueous PVA solution. This aqueous solution was charged into a glass vial (volume: 70 ml) and irradiated at room temperature with γ-rays for 3 hours at a dose rate of about 3 kGy/h while stirring, thereby producing a gold nanoparticle dispersion. The conditions of γ-ray irradiation were as follows.
- Radiation source:: cobalt 60 γ-ray source (energy of γ-ray photons: 1.25 MeV)
- Intensity at radiation source:: about 7000 curies

As a result, the GSH concentration of the supernatant was found to be about 28 µM, thereby demonstrating that the concentration of GSH bonded to the fine particles of the invention was about 72 µM and that a large amount of GSH was bonded (thiol bond) to the fine particles of the invention.

The test results given above demonstrate that the fine particles of the invention are, as described above, bondable via linker molecules to, for example, antigens, enzymes, proteins, cells, and a variety of drugs, thereby being usable as pharmaceuticals, diagnostic agents, cell markers, enzyme fixatives, etc.

### Example 2

A fine particle dispersion was obtained in the same manner as in Example 1(2) except that PVA-free water was used in place of the 1 wt.% aqueous PVA solution. This dispersion was charged into a glass vial (volume: 150 ml). The air inside the vial was purged by argon gas. The dispersion was then subjected to ultrasonic irradiation:
frequency: 200 kHz
output: 200 W
irradiation time: 20 minutes

In this manner, a dispersion of fine particles of the invention (noble metal/metal oxide composite fine particles) was obtained.

The dispersion was subjected to magnetic separation according to the method described in Example 1(3), thereby giving a powder. XRD and TEM performed as described in Example 1(4) with respect to the dispersion showed that a large amount of Au nanoparticles (mean particle diameter: about 40 nm) were supported on the surface of fine Fe₂O₃ particles. Figure 5 shows a TEM image of the powder (taken with 50000x magnification). In the figure, the high-contrast particles (particles appearing black) are Au nanoparticles. Since the Au nanoparticles are barely bonded to themselves, it is clear that the bonding between Au nanoparticles and Fe₂O₃ nanoparticles is stronger than bonding that occurs between Au nanoparticles.

### Example 3

A dispersion of fine particles of the invention was obtained in the same manner as in Example 1(2) using γ-ray irradiation except that PVA-free water was used in place of the 1 wt.% aqueous PVA solution. The fine particles of the invention were isolated in the form of a powder from the dispersion as in Example 1(3).

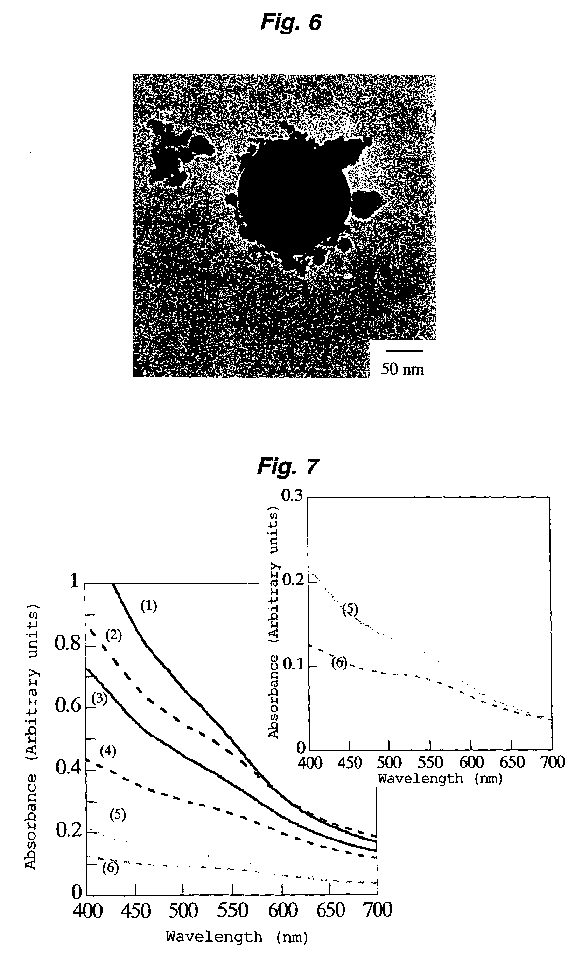

Figure 6 shows a TEM image of the resulting fine particles of the invention (taken with 50000x magnification). This figure demonstrates that Au nanoparticles having a mean particle diameter of about 140 nm were produced. It is clear that a large number of Fe₂O₃ nanoparticles are bonded to the surface of the Au nanoparticles. The results show that there is a strong bonding force between the Au nanoparticles and the Fe₂O₃ nanoparticles.

### Example 4

Dispersions of fine particles of the invention (noble metal/metal oxide composite fine particles) were obtained in the same manner as in Example 1(2) except that the magnetic nanoparticles (mean particle diameter: 23 nm) were used in amounts of 39.4 mg, 29.5 mg, 19.7 mg, 9.8 mg and 4.9 mg instead of 49.2 mg, and the duration of γ-ray irradiation was extended from 3 hours to 6 hours. The fine particles of the invention contained in each resulting dispersion were isolated as in Example 1(3), and the redispersions thereof (magnetic components, 20-fold diluted upon measurement) were subjected to absorbance analyses as in Example 1(4). The results are shown in Figure 7 (results of the magnetic components) as in Figure 1. Figure 7 includes the results obtained when the staring magnetic nanoparticles were used in an amount of 49.2 mg as in Example 1. Line (1) indicates the result of the use of 49.2 mg of magnetic nanoparticles; Line (2) indicates the result of the use of 49.2 mg of magnetic nanoparticles; Line (3) shows the result of the use of 39.4 mg of magnetic nanoparticles; Line (4) shows the result of the use of 29.5 mg of magnetic nanoparticles; Line (5) shows the result of the use of 19.7 mg of magnetic nanoparticles; and Line (6) shows the result of the use of 9.8 mg of magnetic nanoparticles.

The results shown in Figure 7 demonstrate that the magnetic components exhibit a surface plasmon absorption due to gold nanoparticles irrespective of the amount of the starting magnetic nanoparticles.

### Example 5

A dispersion of fine particles of the invention (noble metal/metal oxide composite fine particles) was obtained in the same manner as in Example 1(2) except that the duration of γ-ray irradiation was extended from 3 hours to 6 hours. The fine particles of the invention were isolated from the resulting dispersion as in Example 1(3) and subjected to TEM imaging as in Example 1(4-3). The particle diameters of 200 gold particles among the gold particles constituting the composite fine particles were measured in reference to the TEM image using vernier calipers to determine the particle size of the gold particles constituting the composite fine particles.

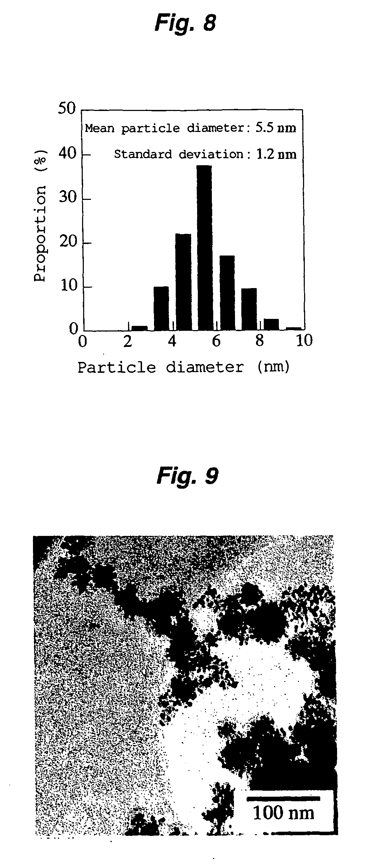

Figure 8 shows the result. In the figure, the horizontal axis represents particle diameter (nm) and the vertical axis represents particle size proportion ([number/200]x100%).

The results presented in Figure 8 show that all the gold particles measured had a particle size of 10 nm or less, and the mean particle diameter thereof was calculated to be about 5.5 nm. The standard deviation (S.D.) of the mean particle diameter of the 200 gold particles thus measured was about 1.2 nm and was relatively minor. In other words, the gold particles constituting the composite fine particles obtained according to this method are nano-sized, and their particle sizes are fairly uniform.

### Example 6

A dispersion of fine particles of the invention (noble metal/metal oxide composite fine particles) was obtained in the same manner as in Example 1(2) except that the amount of the starting magnetic nanoparticles (mean particle diameter: 23 nm) was 4.9 mg instead of 49.2 mg, and the duration of γ-ray irradiation was extended from 3 hours to 6 hours. The fine particles of the invention were isolated from the resulting dispersion as in Example 1(3), and subjected to TEM imaging as in Example 1(4-3).

The result is shown in Figure 9.

In comparison with the results shown in Figures 3 and 4, the result presented in Figure 9 establishes that in the fine particles of the invention obtained in this Example, a large amount of fine Au particles are supported on the surface of Fe₂O₃ nanoparticles as in the fine particles obtained in Example 1, and the amount of supported fine Au particles is greater than in the fine particles obtained in Example 1.

### Example 7

A dispersion of fine particles of the invention (noble metal/metal oxide composite fine particles) was obtained in the same manner as in Example 1(2) except that the starting magnetic nanoparticles (γ-Fe₂O₃, mean particle diameter: 23 nm) were replaced by similarly-prepared Fe₃O₄ nanoparticles (mean particle diameter: 100 nm), and the duration of γ-ray irradiation was extended from 3 hours to 6 hours.

Using this dispersion, a redispersion of fine particles of the invention was prepared in the same manner as in Example 1(3). This redispersion and the supernatant thereof (non-magnetic component) obtained after magnetic separation were both diluted 10-fold with water, and then subjected to absorbance analyses as in Example 1(4-1).

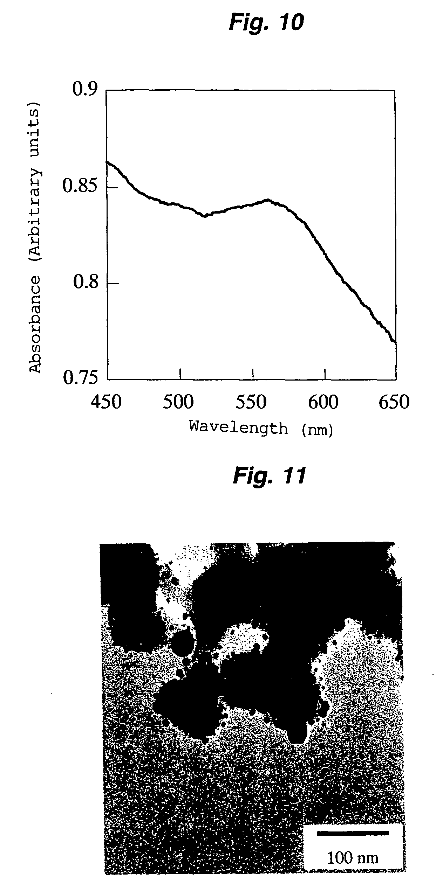

The results obtained with respect to the magnetic component are shown in Figure 10 as in Figure 1 (In Figure 10, the graph given at the upper right is a partial enlargement covering the absorbance from 0.75 to 0.9.

It is clear from the results shown in Figure 10 that, as with the fine particles prepared in Example 1, the surface plasmon absorption of gold nanoparticles can be observed with respect to the fine particles of the invention prepared in this Example, thereby confirming the production of fine particles of the invention. In contrast, the non-magnetic component was transparent.

### Example 8

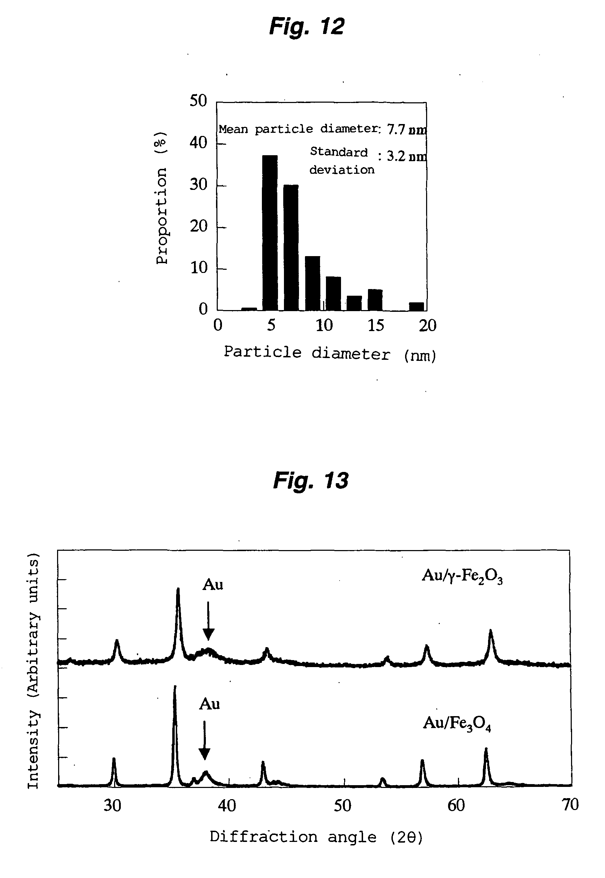

(1) A powder specimen was prepared as in Example 1(3) using the redispersion of the composite fine particles of the invention prepared in Example 7, and subjected to TEM imaging. Figure 11 shows the image.
(2) With respect to the powder specimen, the particle size distribution of the gold nanoparticles constituting the composite fine particles was calculated as in Example 5. The results thus obtained are presented in Figure 12 in the same manner as in Figure 8.
   As can be understood from Figures 11 and 12, in the fine particles of the invention obtained in this Example, a large amount of gold nanoparticles are supported on the surface of Fe₃O₄ particles; although most of the gold nanoparticles have particle sizes within 5 to 10 nm, there are some having particle sizes of about 20 nm; the mean particle diameter is about 7.7 nm; and the particle size standard deviation (S.D.) is about 3.2 nm.
(3) The powder specimen was subjected to an x-ray diffraction measurement (XRD) as in Example 1(4-2).
   The result is presented in Figure 13 (indicated as "Au/Fe₃O₄") as in Figure 2. Figure 13 includes the result of the XRD measurement of the composite fine particles of the invention prepared in Example 1 (the same result as presented in Figure 2), indicated as Au/γ-Fe₂O₃.
   As can be understood from the results presented in Figure 13 as well as Figure 2, gold is supported in the fine particles of the invention.

### Example 9

### (1) Preparation of magnetic metal oxide fine particles to produce fine particles of the invention

Fe₂O₃ nanoparticles (trade name: NanoTek™ Iron Oxide, manufactured by Nanophase Technologies Corporation, acquired from Adachi New Industrial Co., Ltd., mean particle diameter: 23 nm) as used in Example 1(1) were used as magnetic metal oxide nanoparticles.

### (2) Preparation of fine particles of the invention

To 50 ml of a 1 wt.% aqueous PVA solution were added 16 mg of the magnetic metal oxide nanoparticles (mean particle diameter: 23 nm) of (1) above, 0.472 ml of 2-propanol, and 10.4 mg of K₂PtCl₄ (equivalent to 4.9 mg Pt) or 7.4 ml of PdCl₂·2NaCl (equivalent to 2.7 mg Pd), to prepare starting nanoparticle dispersions. Each dispersion was charged into a glass vial (volume: 70 ml). The vials were argon gas-purged and sealed. The vials were then irradiated at room temperature with γ-rays for 6 hours at a rate of about 3 kGy/h while stirring. The conditions of γ-ray irradiation were as described in Example 1.

In this manner, dispersions of fine particles of the invention (Pt/γ-Fe₂O₃ and Pd/γ-Fe₂O₃ composite fine particles) were obtained.

### (3) Isolation of fine particles (powder) of the invention

A magnetic field created by a cylindrical magnet with a diameter of 30 mm and a height of 10 mm (surface magnetic flux density: 445 mT) was applied to the dispersions obtained in (2) from outside the glass vials accommodating the dispersions, and the glass vials were left to stand for 1 to 24 hours in the field. The glass vials were then opened and the supernatants were removed. 50 ml of water was added to each of the remaining portions to prepare dispersions. These redispersions were dried, thereby giving fine particles of the invention in the form of powders.

### (4) Tests for examining the properties of the fine particles of the invention

### (4-1) TEM images

The powder specimens of the magnetic components after magnetic separation in (3) above were subjected to TEM observation as in Example 1(4-3). Moreover, the particle diameters of 100 particles of the Pt nanoparticles and 100 particles of Pd nanoparticles constituting the composite fine particles were measured in reference to the TEM images using vernier calipers to examine the particle size distributions of the Pt particles and Pd particles as in Example 5.

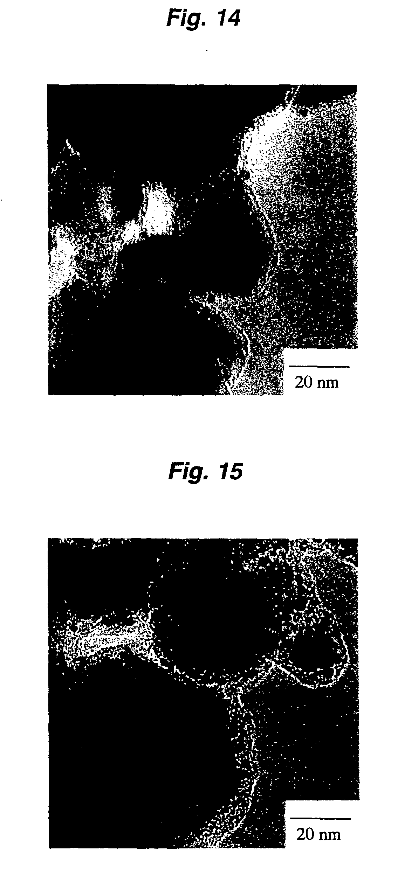

Figure 14 is a TEM image (of the Pt/γ-Fe₂O₃ composite fine particles) and Figure 15 is a TEM image (of the Pd/γ-Fe₂O₃ composite fine particles).

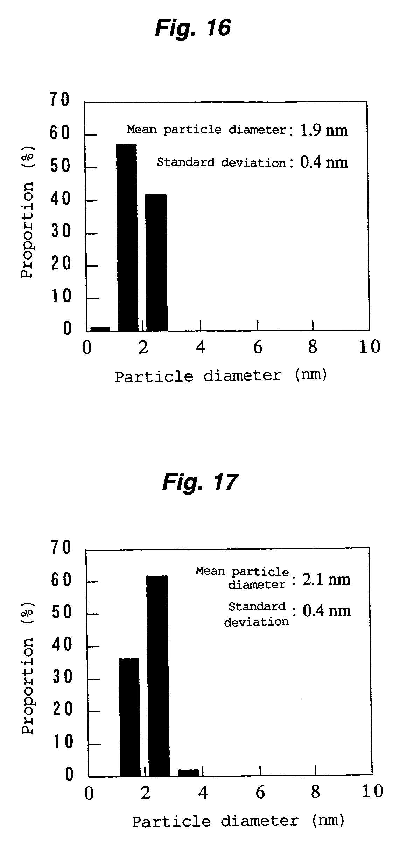

The results of measuring the particle size distributions are presented in Figure 16 (for the Pt/γ-Fe₂O₃ composite fine particles) and in Figure 17 (for the Pd/γ-Fe₂O₃ composite fine particles) in the same manner as in Figure 8.

It is clear from the results shown in these figures that the fine particles obtained according to this method are composite fine particles in which large amounts of noble metal nanoparticles (Pt or Pd) having a mean particle diameter of about 2 nm are supported on the surface of the iron oxide nanoparticles, and the supported noble metal nanoparticles, i.e., Pt particles and Pd particles, have narrow particle size distributions. (4-2) X-ray diffraction measurement (XRD)

The powder specimens of the magnetic components after magnetic separation in (3) above were subjected to XRD measurements as in Example 1(4-2).

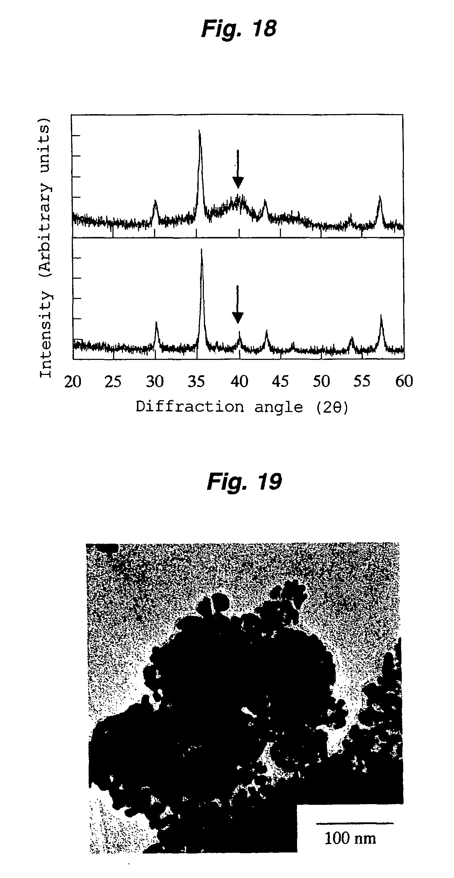

Figure 18 shows the results in the same manner as in Figure 2.

The upper part of Figure 18 shows the results for the Pt/γ-Fe₂O₃ composite fine particles, and the lower part shows the results for the Pd/γ-Fe₂O₃ composite fine particles.

As can be understood from the results presented in Figure 18, the composite fine particles of the invention after magnetic separation show peaks derived from Pt or Pd at approximately 2θ = 40 (indicated with arrows in the figure), thereby demonstrating that Pt or Pd is supported in the fine particles of the invention obtained in this Example.

### Example 10

A dispersion of fine particles of the invention (noble metal/metal oxide composite fine particles) was obtained in the same manner as in Example 1(2) except that the starting magnetic nanoparticles (mean particle diameter: 23 nm) was used in an amount of 4.9 mg instead of 49.2 mg, and the duration of γ-ray irradiation was extended from 3 hours to 6 hours. From the resulting dispersion, a redispersion of the composite fine particles (50 ml) was prepared as in Example 1(3).

To this redispersion, 50 ml of an aqueous solution containing 0.5 mM K₂CO₃ and 0.5 mM HAuCl₄ was added. To the resulting solution, 50 ml of an aqueous NaBH₄ solution (2 mM) was added while stirring. Composite fine particles were magnetically isolated from the resulting solution in the same manner as above, and then redispersed in 50 ml of water.

To this redispersion, 50 ml of an aqueous NaBH₄ solution (2 mM) was added while stirring. The composite fine particles were recovered by magnetic separation carried out as above. The composite fine particles were dried and then subjected to TEM imaging as in Example 1(4-3).

Figure 19 shows the result.

As can be understood from the results presented in Figure 19, in this Example also, fine particles of the invention are obtained once a large amount of fine Au particles are supported on the surface of Fe₂O₃ nanoparticles. Specifically, it can be understood that the surfaces of the Fe₂O₃ nanoparticles having substantially uniform particle sizes appear to be almost entirely coated with fine Au particles. The mean particle diameter of the Au particles was about 10.2 nm.

### Example 11

A dispersion of fine particles of the invention and a powder thereof were prepared using ultrasonic irradiation in the same manner as in Example 2 except that HAuCl₄ was used in an amount of 1.7 mg (0.1 mM) instead of 8.5 mg (0.5 mM). The XRD and TEM of a powder of the fine particles of the invention demonstrated that a large amount of Au nanoparticles were supported on the surface of fine Fe₂O₃ particles, and the mean particle diameter of the Au nanoparticles was about 20 nm.

This Example and Example 2 demonstrate that according to the method of the invention the size of the Au nanoparticles constituting the resulting fine particles of the invention can be readily controlled by changing the concentration of Au ions.

### Example 12

A dispersion of fine particles of the invention was obtained as in Example 11. This dispersion was subjected to magnetic separation as in Example 1(3). The resulting fine particles of the invention once redispersed (magnetic component) and the supernatant after magnetic separation (non-magnetic component) were both subjected to absorbance analysis in the same manner as in Example 1(4-1) (both diluted 20-fold with water).

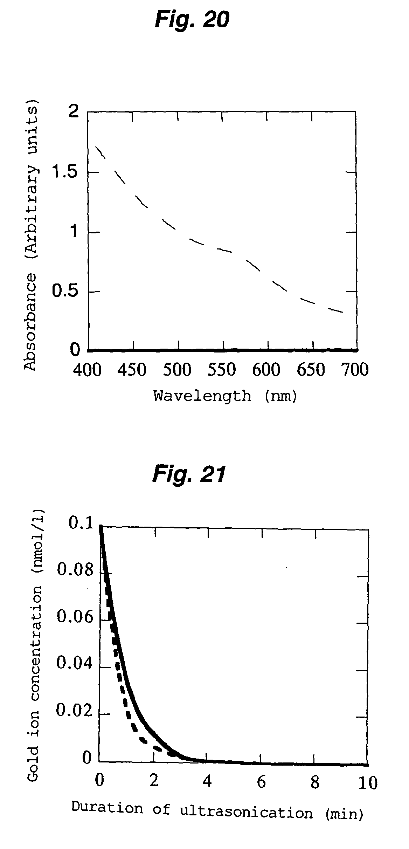

Figure 20 shows the result as in Figure 1.

This figure shows a surface plasmon absorption of gold supported on the fine particles with respect to the magnetic component, but does not show such a surface plasmon absorption with respect to the non-magnetic component. This fact establishes that, in this Example also, the fine particles of the invention can be isolated by magnetic separation.

### Example 13

Dispersions of fine particles of the invention were obtained in the same manner as in Example 11 with various durations of ultrasonic irradiation, i.e., 1, 3, 6 and 10 minutes, instead of 20 minutes. Fine particles of the invention were isolated from these dispersions by filtration. The concentrations of gold ions remaining in the filtrates were then measured according to Yoshiteru Mizukoshi, Kenji Okitsu, Hiroshi Bandow, Yoshio Nagata, and Yasuaki Maeda, *Bunseki Kagaku (Analytical Chemistry)* Vol. 45, No. 4, 327-331 (1996).

The results are shown in Figure 21 (solid line). In Figure 21, the vertical axis represents the concentration of remaining gold ions (unit: mmol/l), and the horizontal axis represents the duration of ultrasonic irradiation (minutes). This figure includes for comparison the results obtained when Au nanoparticles only were used in the procedure described above (i.e., when magnetic metal oxide nanoparticles were not used) as a broken line.

It is clear from the results presented in Figure 21 that according to the method of the invention the reaction for forming the desired fine particles of the invention completes within about 3 to 4 minutes of ultrasonic irradiation.

### Example 14

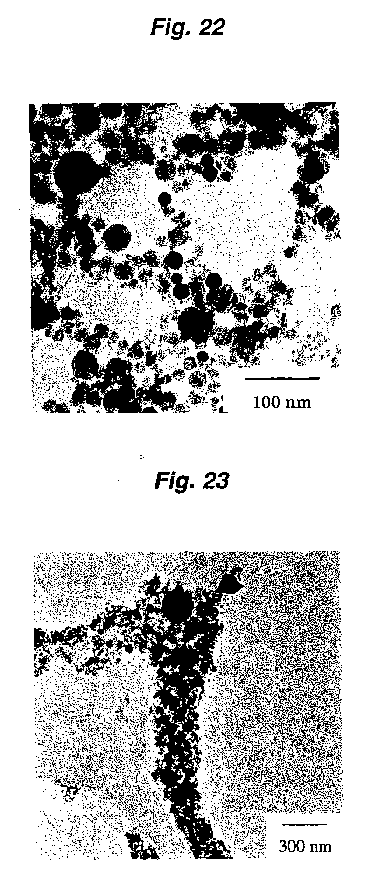

A dispersion was prepared by adding 1.7 mg of HAuCl₄ and 0.472 ml of 2-propanol to 50 ml of water. This dispersion was charged into a glass vial (volume: 150 ml), and the air inside the vial was purged by argon gas. The dispersion was then subjected to ultrasonic irradiation in the same manner as in Example 2, thereby producing an Au nanoparticle dispersion. 49.2 mg of magnetic nanoparticles (mean particle diameter: 23 nm) as described in Example 1(1) were introduced into the dispersion and mixed. The mixture was subjected to magnetic separation as in Example (3), and the resulting fine particles in the form of a powder were then subjected to TEM imaging as described in Example 1(4-3). The TEM image thus obtained is presented in Figure 22.

As can be understood from the figure, fine particles of the invention in which gold nanoparticles are supported on the surface of magnetic metal oxide nanoparticles can also be obtained according to the method described herein in which monolithic Au nanoparticles are formed first and then magnetic nanoparticles are introduced into the system.

### Comparative Example 1

According to the second method disclosed in Japanese Examined Patent Publication No. 1993-34284 (see Example 3, for example), K₂CO₃ was added to 250 ml of a solution containing 5 x 10⁻³ mol/l (Au: 1 g/l) aqueous HAuCl₄ solution and 10 g/l Fe₂O₃ nanoparticles (as used in Example 1) to control the pH at about 9.7, and an aqueous hydrazine solution was added dropwise to this solution in an amount such that the N₂H₄ concentration was 2.5 x 10⁻² mol/l at a rate of 1 ml/min over 50 minutes to carry out a reduction reaction.

The result of UV-VIS spectroscopic analysis as performed in Example 1(4-1) of the suspension obtained after the reduction reaction did not show gold plasmon absorption.

Magnetic separation carried out as described in Example 1(3) revealed that the nonmagnetic component was transparent. The presence of monolithic Au particles and Au ions could not be confirmed.

The fine particles thus obtained were subjected to XRD measurement and TEM imaging as in Examples 1(4-2) and (4-3), respectively. The TEM image thus obtained is presented in Figure 23. XRD measurement confirmed that the high-contrast portions seen in the figure indicate gold. The mean particle diameter of the gold particles exceeded 100 nm.

In order to enhance the amount of supported gold particles, another suspension was prepared in the same manner as described above but using the starting Fe₂O₃ nanoparticles in an amount of 0.6 g/l and HAuCl₄ in a concentration of 5 x 10⁻⁴ mol/l (Au: 0.1 g/1, the total volume of the starting dispersion was 50 ml).

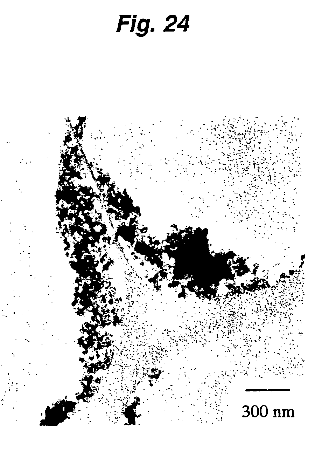

Fine particles in the form of a powder were isolated from the resulting suspension. A TEM image thereof obtained as above is presented in Figure 24.

It is clear from the figure that only relatively large gold particles with a mean particle diameter of more than 100 nm were precipitated in this Example.

### INDUSTRIAL APPLICABILITY

The noble metal/magnetic metal oxide composite fine particles provided by the present invention are for use, typically in the field of medical care/diagnosis, as pharmaceuticals (such as drugs for DDS); diagnostic agents; analytical reagents for a variety of substances (pharmaceutically active compounds, antigens, antibodies, receptors, haptens, enzymes, proteins, peptides, nucleic acids, hormones, pathogens, toxins, etc.); separation/purification agents for cells and the like (cell markers, enzyme fixatives, protein refining agents, etc.); etc.

## Claims

1. A method for producing noble metal/magnetic metal oxide composite fine particles comprising the steps of dispersing magnetic metal oxide fine particles in a solution containing a noble metal ion or a noble metal complex, or adding to the solution a metal ion that can form the magnetic metal oxide; and irradiating the resulting dispersion or solution with ultrasonic waves or ionizing radiation.

2. A method for producing noble metal/magnetic metal oxide composite fine particles comprising the steps of dispersing magnetic metal oxide fine particles in a solution containing a noble metal ion or a noble metal complex; and irradiating the dispersion with ultrasonic waves or ionizing radiation.

3. The method according to claim 1, wherein the noble ion or the noble metal complex comprises at least one metal selected from the group consisting of gold, silver, platinum, palladium, ruthenium, rhodium, iridium, and rhenium.

4. The method according to claim 1, wherein the solution containing the noble metal ion or noble metal complex is an aqueous solution, hydroalcoholic solution, or alcoholic solution.

5. The method according to claim 1, wherein the solution containing the noble metal ion or noble metal complex further contains at least one additive selected from the group consisting of water-soluble high-molecular-weight compounds, surfactants, and organic solvents.

6. The method according to claim 1, wherein the magnetic metal oxide fine particles are fine particles comprising at least one member selected from the group consisting of γ-Fe₂O₃ and Fe₃O₄.

7. The method according to claim 1, wherein the concentration of the noble metal ion or noble metal complex in the solution containing the noble metal ion or the noble metal complex is 1 µM to 1 M; and the magnetic metal oxide fine particles are dispersed, or the metal ion that can form the magnetic metal oxide is added, in an amount of 0.001 to 50 wt.% relative to the solution.

8. The method according to claim 1, wherein the irradiation with ultrasonic waves is performed at a frequency of 10 kHz to 10 MHz and at an output of at least 1 W.

9. The method according to claim 1, wherein the irradiation with ionizing radiation is performed at an absorbed dose of at least 1 J/kg.

10. A method for producing noble metal/magnetic metal oxide composite fine particles comprising the steps of irradiating a solution containing a noble metal ion or a noble metal complex with ultrasonic waves or ionizing radiation; and adding to and mixing in the irradiated solution magnetic metal oxide fine particles.

11. Noble metal/magnetic metal oxide composite fine particles obtained according to the method set forth in claim 1.

12. The noble metal/magnetic metal oxide composite fine particles according to claim 11 that are magnetic and comprise magnetic metal oxide fine particles having a mean particle diameter of 1 nm to 1 µm and noble metal nanoparticles having a mean particle diameter of 1 to 500 nm affixed to the surface of the magnetic metal oxide fine particles.

13. The noble metal/magnetic metal oxide composite fine particles according to claim 11 that are colored and dispersible in a liquid solvent.

14. A substance in which noble metal/magnetic metal oxide composite fine particles and linker molecules are bonded, which is a substance in which the noble metal/magnetic metal oxide composite fine particles according to claim 11 and linker molecules are bonded, and each linker molecule is bonded to a noble metal contained in one of the fine particles and has a functional group that can chemically bond with a test substance.

15. The substance according to claim 14 which is an analytical reagent for a substance selected from the group consisting of pharmaceuticals, antigens, antibodies, receptors, haptens, enzymes, proteins, peptides, nucleic acids, hormones, pathogens, and toxins.

16. The substance according to claim 14 which is a pharmaceutical, diagnostic agent, cell marker, enzyme fixative, or protein refining agent.

17. The substance according to claim 14 for use in chromatography.

18. The substance according to claim 14 for use in soil modification, or water and air quality improvement.

19. The substance according to claim 14 for use as a catalyst, adsorbent, or sensor.
